(19) Europäisches Patentamt
European Patent Office
Office européen des brevets

(11) **EP 1 926 201 A2**

(12) **EUROPEAN PATENT APPLICATION**

(43) Date of publication:
**28.05.2008 Bulletin 2008/22**

(51) Int Cl.:
*H02M 7/06* *(2006.01)*    *H02H 9/00* *(2006.01)*

(21) Application number: **07022123.9**

(22) Date of filing: **14.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.11.2006 JP 2006317059**

(71) Applicant: **MITSUBISHI ELECTRIC CORPORATION**
**Chiyoda-ku**
**Tokyo 100-8310 (JP)**

(72) Inventors:
• **Fujita, Satoru**
**Tokyo 100-8310 (JP)**
• **Itoi, Yuuichi**
**Tokyo 100-8310 (JP)**
• **Yajima, Yoshio**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **Capacitor drop type power supply circuit and air conditioner**

(57)    To provide a capacitor drop type power supply circuit that can withstand a surge-current generated at power-on by use of inexpensive elements without requiring a complicated circuit configuration. A capacitor drop type power supply circuit includes: an AC power supply (1) connected to a series circuit of a resistor (2), a first capacitor (3), and a first diode (4) whose cathode is connected to the first capacitor (3); a series circuit of a second diode (5) and a Zener diode (6), which is parallel-connected to the first diode (4); and a second capacitor (7) parallel-connected to the Zener diode (6), the circuit outputting a DC voltage generated across the second capacitor (7).

F I G. 1

1: AC POWER SUPPLY
2: RESISTOR
3: FIRST CAPACITOR
4: FIRST DIODE (FOR DISCHARGE)
5: SECOND DIODE
6: ZENER DIODE
7: SECOND CAPACITOR
8: COMMUNICATION CIRCUIT

EP 1 926 201 A2

**Description**

BACKGROUND OF THE INVENTION

1. Field of the Invention

The present invention relates to a capacitor drop type power supply circuit for converting an AC power to a DC power, and an air conditioner equipped with the capacitor drop type power supply circuit.

2. Description of the Related Art

An outdoor unit and an indoor unit perform serial communications at all times. For the serial communications, one of power supply lines of the indoor unit and outdoor unit is grounded, and an additional communication line is connected thereto. Thus, when microcomputers on the indoor unit side and outdoor unit side communicate with each other, the power supply lines and the communication line should be insulated from the microcomputers with a photo-coupler. If communications are made in such a state, another power supply for communications needs to be provided.
Hitherto, a capacitor drop type power supply circuit that utilizes an impedance of a capacitor has been employed as the power supply. The power supply circuit is configured such that a series circuit of a first capacitor, a resistor and a Zener diode is connected to an AC power supply, a series circuit of a diode and a second capacitor is parallel-connected to the Zener diode, and a DC voltage across the second capacitor is used as a power supply (see Japanese Unexamined Patent Application Publication No. 2000-209865, for instance).
In the above capacitor drop type power supply circuit of the related art, a current continuously flows into the Zener diode from the AC power supply through the first capacitor and the resistor. Focusing on a current at power-on, a current flowing through the Zener diode approximates a value of Expression (1). Provided that a switching phase angle is 90 degrees, a power supply voltage is 230 V, and a resistance is 10 Ω, for example, a current of 32 A flows through the Zener diode and destructs an element. As possible solutions to this problem, a large-capacity Zener diode that can withstand a surge current flowing at power-on is selected, or a resistance is increased to reduce a surge current flowing at power-on. However, in the case of increasing a capacity of the Zener diode, there is a problem that an element itself costs high. On the other hand, in the case of increasing a resistance, there is a problem of a large resistance loss.
$$I(t) = \sqrt{2}V\sin(\phi)/R \qquad \dots (1)$$

φ: switching phase angle
R: resistance
V: power supply voltage

SUMMARY OF THE INVENTION

The present invention has been accomplished with a view of solving the above problems, and it is an object of the present invention to provide a capacitor drop type power supply circuit that can withstand a surge current at power-on by use of an inexpensive element without requiring a complicated circuit configuration, and an air conditioner equipped with the power supply circuit.
A capacitor drop type power supply circuit according to the present invention includes: an AC power supply connected to a series circuit of a resistor, a first capacitor and a first diode whose cathode is connected to the first capacitor; a series circuit of a second diode and a Zener diode, which is parallel-connected to the first diode; and a second capacitor parallel-connected to the Zener diode, the circuit outputting a DC voltage generated across the second capacitor.
According to the present invention, the first diode cathode-connected to the first capacitor is provided in the series circuit connected to the AC power supply, so a surge current generated at power-on can be allowed to flow into the first diode 4, making it unnecessary to employ a large-capacity Zener diode. Hence, the entire circuit can be configured at lower cost without requiring a complicated circuit configuration.

BRIEF DESCRIPTION OF THE DRAWINGS

Fig. 1 is a circuit diagram of the configuration of a capacitor drop type power supply circuit according to an embodiment mode of the present invention;

Figs. 2(1) to 2(4) are explanatory views showing operations of the capacitor drop type power supply circuit of the embodiment mode in accordance with energization patterns;

Fig. 3 is a waveform diagram showing waveforms of each portion in accordance with energization patterns;

Fig. 4 is a circuit diagram for serial communications of an air conditioner according to an embodiment of the present invention; and

Fig. 5 is a circuit diagram showing a connection between the capacitor drop type power supply circuit and a communication circuit provided in an outdoor unit of the air conditioner.

DESCRIPTION OF THE PREFERRED EMBODIMENTS

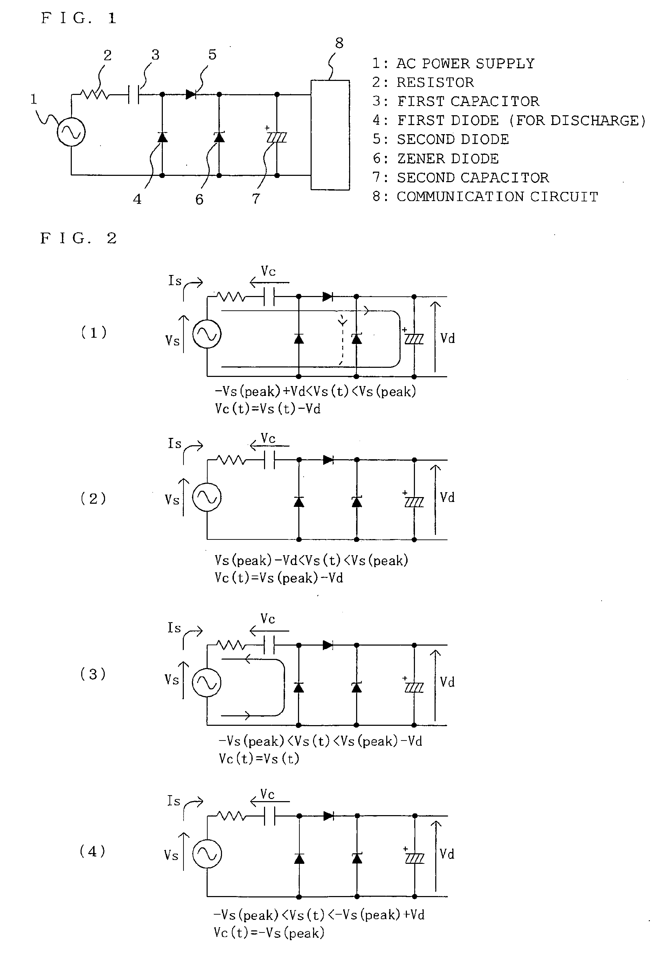

Fig. 1 is a circuit diagram of the configuration of a capacitor drop type power supply circuit according to an embodiment mode of the present invention.

The capacitor drop type power supply circuit of this embodiment mode is configured as follows. That is, an AC power supply 1 is connected with a series-circuit of a resistor 2, a first capacitor 3, and a first diode 4 that is cathode-connected to the first capacitor 3. The first diode 4 is parallel-connected to a series circuit of a second diode 5 and a Zener diode 6. The Zener diode 6 is parallel-connected to a second capacitor 7 (smoothing capacitor). A DC voltage across the second capacitor 7 is outputted to a communication circuit 8. The above resistor 2 controls a surge current at power-on, and the first capacitor 3 controls a current at normal time. The first diode 4 functions to discharge a charge accumulated in the first capacitor 3 as detailed in the following description about operations, and the second diode 5 carries out half-wave rectification of a power supply voltage from the AC power supply 1.

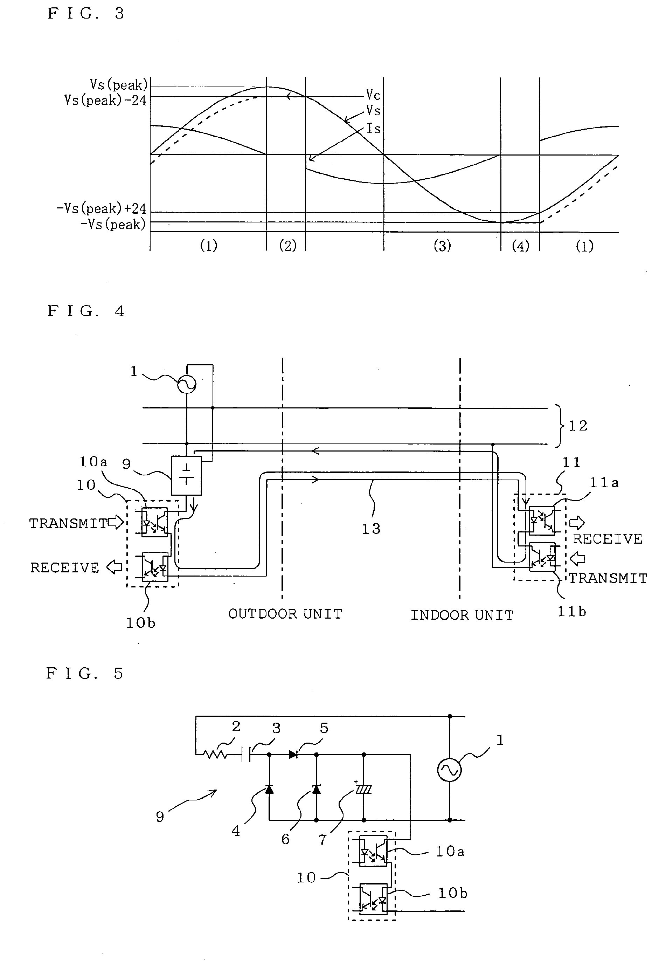

Referring next to Figs. 2(1) to 2(4) and Fig. 3, operations of the thus-configured capacitor drop type power supply circuit are described. Figs. 2(1) to 2(4) are explanatory views showing operations of the capacitor drop type power supply circuit of this embodiment mode in accordance with energization patterns. Fig. 3 is a waveform diagram showing waveforms of each portion in accordance with energization patterns.

If a power supply voltage Vs of the AC power supply 1 is higher than the total value of a voltage Vc of the first capacitor 3 and a Zener voltage Vd of the Zener diode 6, as shown in Fig. 2(1), a power supply current Is flows from the AC power supply 1 through the resistor 2 and the first capacitor 3. After the half-wave rectification with the second diode 5, the current flows into the Zener diode 6. Then, the Zener voltage Vd (24 V) is generated across the diode and charges the second capacitor 7. In this case, the voltage Vc of the first capacitor 3 is determined by subtracting the Zener voltage Vd from the power supply voltage Vs as given by Expression (2). The voltage Vc has a waveform of Fig. 3(1). In this case, the power supply voltage Vs in a range defined by Expression (3) satisfies Expression (2).

$$Vc(t) = Vs(t) - Vd \qquad\qquad \dots (2)$$

$$-V(peak) + Vd < Vs(t) < Vs(peak) \qquad \dots (3)$$

Then, as shown in Fig. 3(2), when the power supply voltage Vs reaches a peak value, the supply of the power supply current Is from the AC power supply 1 is stopped, and no current flows. This state is kept during a period in which the voltage Vs exceeds the voltage Vc of the first capacitor 3. The voltage Vc of the first capacitor 3 is determined by subtracting the Zener voltage Vd from the voltage Vs(peak) obtained at a peak value of the voltage Vs(t) of Expression (2) as given by Expression (4). At this time, the power supply voltage Vs falls within a range of Expression (5). In this case, the circuit operates as shown in Fig. 2(2).

$$Vc(t) = Vs(peak) - Vd \qquad\qquad \dots (4)$$

$$Vs(peak) + Vd < Vs(t) < Vs(peak) \qquad \dots (5)$$

If the power supply voltage Vs is further reduced, the power supply current Is from the AC power supply 1 flows through the first diode 4 (see Fig. 2(3)). The current Is keeps flowing until the power supply voltage Vs reaches the lowest level (-Vs(peak)) (see Fig. 3(3)). At this time, the voltage Vc of the first capacitor 3 and the power supply voltage Vs are at the same potential level. A range of the power supply voltage Vs is determined by Expression (7).

$$Vc(t) = Vs(t) \qquad\qquad\qquad \dots (6)$$

$$-Vs(peak) < Vs(t) < Vs(peak) \qquad\qquad \dots (7)$$

Then, as shown in Fig. 3(4), when the power supply voltage Vs reaches the lowest level (-Vs(peak), the voltage Vc of the first capacitor 3 is expressed by Expression (8). If the power supply voltage Vs exceeds the voltage Vc of the first capacitor 3, the first diode 4 is turned off, so the AC power supply 1 stops the supply of the power supply current Is that flows through the first diode 4 and no current flows. At this time, the circuit operates as shown in Fig. 2(4). If the power supply voltage Vs is further increased and meets the condition of Expression (9) (see Fig. 3(1)), the power supply current Is subjected to half-wave rectification with the help of the second diode 5 flows through the Zener diode 6 (see Fig. 2(1)). In this case, a range of the power supply voltage Vs is expressed by Expression (10).

$$Vc(t) = -Vs(peak) \qquad\qquad\qquad \dots (8)$$

$$Vs(t) - Vc(t) = Vs - Vs(peak) > Vd \qquad \dots (9)$$

$$-Vs(peak) < Vs(t) < -Vs(peak) \qquad\qquad \dots (10)$$

The current Is is determined by differentiating the voltage Vc of the first capacitor 3 and multiplying the calculated value by a capacitance C of the first capacitor, on the basis of Expression (11) below.

$$Vc(t) = 1/C \int Is(t)$$

$$Is(t) = dVc(t)/dt \times C \qquad\qquad \dots (11)$$

As described above, according to the embodiment mode, the first diode 4 cathode-connected to the first capacitor 3 is provided in the series circuit connected to the AC power supply 1, so a surge current generated at power-on may be allowed to flow into the first diode 4. Thus, it is unnecessary to use the large-capacity Zener diode 6 that can withstand a surge current, and the entire circuit can be manufactured at lower cost without requiring a complicated circuit configuration. Further, only a current flowing through the Zener diode 6 involves a loss, so a power-saving power supply circuit can be provided.

(Example)

Referring next to Figs. 4 and 5, an example of the capacitor drop type power supply circuit of the present invention is described. Fig. 4 is a circuit diagram showing serial communications of an air conditioner according to the embodiment of the present invention. Fig. 5 is a circuit diagram showing connection between the capacitor drop type power supply circuit and a communication circuit provided in an outdoor unit of an air conditioner. Incidentally, the configuration of the capacitor drop type power supply circuit is the same as that of the embodiment mode, so description thereof is omitted here.

A capacitor drop type power supply circuit 9 is connected to power supply lines 12 for supplying an AC power 1 to an outdoor unit and an indoor unit, on its input side. A communication circuit 10 of the outdoor unit includes a photo-coupler 10a on the transmission side is connected to an output end (positive side) of the capacitor drop type power supply circuit 9, and a photo-coupler 10b on the reception side, which is connected to the photo-coupler 10a is connected to a photo-coupler 11a on the reception side of the communication circuit 11 provided in the indoor unit through a communication line 13. A photo-coupler 11b on the transmission side, which is connected to the photo-coupler 11a is connected to one of the power supply lines 12 (on the ground side).

Owing to the above connection, a DC voltage of the capacitor drop type power supply circuit 9 is applied to the communication circuit 10 of the outdoor unit and the communication circuit 11 of the indoor unit to thereby realize serial communications between the photo-couplers 10a, 10b, 11a, and 11b. Further, control circuits (for example, microcomputers) incorporated in both of the indoor unit and the outdoor unit are insulated from the DC voltage of the power supply circuit 9 by means of the photo-couplers 10a and 10b of the communication circuit 10 and the photo-couplers 11a and 11b of the communication circuit 11.

Next, a constant of each element of the power supply circuit 9 is described. The AC power supply 1 has a power of 180 to 264 V, the resistor 2 has a resistance of 47 Ω, the first capacitor 3 has a capacitance of 1 μF, the first diode 4 has a surge current of 30 A, the second diode 5 has a surge current of 30 A, the Zener diode 6 has a voltage of 24 V, and the second capacitor 7 has a capacitance of 470 μF.

Since the surge current of the first and second diodes is 30 A, the surge current of 30 A or less is attained if a resistance value of the resistor 2 is 8.8 Ω or more. In this case, a resistance are set to 47 Ω with regard for a margin of components, so that the surge current is suppressed to 8 A.

As described above, according to the example of the present invention, a circuit with a relatively small capacity is used as a power supply, and the power supply circuit can be manufactured at low cost with a small number of components. An output efficiency is also 1 W or less, so power consumption can be considerably reduced. Further, the capacitor drop type power supply circuit 9 is used as a power supply for serial communications between the indoor unit and the outdoor unit, so standby power consumption during a period in which the air conditioner stops operations can be suppressed.

**Claims**

1. A capacitor drop type power supply circuit comprising:

   an AC power supply connected to a series circuit of a resistor, a first capacitor, and a first diode whose cathode is connected to the first capacitor;
   a series circuit of a second diode and a Zener diode, which is parallel-connected to the first diode; and
   a second capacitor parallel-connected to the Zener diode,
   the circuit outputting a DC voltage generated across the second capacitor.

2. An air conditioner, which is provided with the capacitor drop type power supply circuit according to Claim 1 and realizes serial communications between an indoor unit and an outdoor unit, using a DC voltage of the capacitor drop type power supply circuit.

3. The air conditioner according to Claim 2, wherein a circuit for the serial communications is insulated from control circuits of the indoor unit and the outdoor unit.

FIG. 1

1: AC POWER SUPPLY
2: RESISTOR
3: FIRST CAPACITOR
4: FIRST DIODE (FOR DISCHARGE)
5: SECOND DIODE
6: ZENER DIODE
7: SECOND CAPACITOR
8: COMMUNICATION CIRCUIT

FIG. 2

(1)

$-Vs(peak)+Vd<Vs(t)<Vs(peak)$
$Vc(t)=Vs(t)-Vd$

(2)

$Vs(peak)-Vd<Vs(t)<Vs(peak)$
$Vc(t)=Vs(peak)-Vd$

(3)

$-Vs(peak)<Vs(t)<Vs(peak)-Vd$
$Vc(t)=Vs(t)$

(4)

$-Vs(peak)<Vs(t)<-Vs(peak)+Vd$
$Vc(t)=-Vs(peak)$

F I G. 3

Vs(peak)
Vs(peak)−24

−Vs(peak)+24
−Vs(peak)

Vc
Vs
Is

(1)  (2)  (3)  (4)  (1)

F I G. 4

1

12

10a  9
10

11
11a

TRANSMIT⇨

RECEIVE⇦

13

RECEIVE

TRANSMIT

10b

OUTDOOR UNIT      INDOOR UNIT      11b

F I G. 5

2  3  5

1

9

4  6  7

10a

10

10b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000209865 A